# EUROPÄISCHE PATENTSCHRIFT

(11) **EP 3 165 076 B1**
(45) Veröffentlichungstag und Bekanntmachung des Hinweises auf die Patenterteilung: **01.01.2020**
(21) Anmeldenummer: 16002331.3
(22) Anmeldetag: 03.11.2016
(51) Int. Cl.: A01D 34/66, A01B 73/04

(54) **ANBAUGESTELL FÜR EIN NUTZFAHRZEUG**
ADD-ON FRAME FOR AN UTILITY VEHICLE
CHÂSSIS PORTÉ POUR VÉHICULE UTILITAIRE

(30) Priorität: 06.11.2015 DE 102015014274
(43) Veröffentlichungstag der Anmeldung: 10.05.2017
(73) Patentinhaber: Bannaski, Max, 86975 Bernbeuren (DE)
(72) Erfinder: Bannaski, Max, 86975 Bernbeuren (DE)

(56) Entgegenhaltungen:
- EP-A2- 2 644 015
- DE-A1- 1 482 095
- DE-A1-102011 051 672
- FR-A- 1 527 429
- US-A- 3 717 981
- US-A- 5 069 022
- US-A- 5 133 174
- US-A1- 2014 059 991

## Beschreibung

Die Erfindung betrifft ein Anbaugestell gemäß dem Oberbegriff des Patentanspruches 1.

Ein derartiges Anbaugestell ist beispielsweise aus US 5 069 022 A und aus US 5 133 174 A bekannt. Aus DE 1 482 095 A1 ist ein weiteres Anbaugestell bekannt. Dabei enthält das Anbaugestell eine Vielzahl von Achsen, Buchsen, Balken und weiterer Bauteile, um zwei seitliche Schneidwerke und ein mittleres Schneidwerk schwenkbeweglich zu lagern. Dieses Anbaugestell ist an der Frontseite eines Schleppers mittels einer schlepperseitigen Kinematik beweglich gekoppelt.

Der Erfindung liegt die Aufgabe zugrunde, ein Anbaugestell zum Koppeln an ein Nutzfahrzeug bereitzustellen, welches bei einfacher Konstruktion eine effiziente Arbeitsweise mindestens dreier Arbeitsgeräte ermöglicht.

Diese Aufgabe wird durch die Merkmalskombination des Patentanspruches 1 gelöst. Vorteilhafte Ausgestaltungen und Weiterbildungen der Erfindung gehen aus den Unteransprüchen hervor.

Gemäß Anspruch 1 weist das Anbaugestell eine Gestellbasis auf. Weiterhin weist das Anbaugestell Lagermittel auf, welche an der Gestellbasis schwenkbar angeordnet bzw. gelagert sind und zur Lagerung eines mittleren Arbeitsgerätes und und beiderseits des mittleren Arbeitsgeräts (9) jeweils mindestens eines seitlichen Arbeitsgerätes dienen. Dabei sind z.B. erste Lagermittel einem ersten Arbeitsgerät zugeordnet, zweite Lagermittel einem zweiten Arbeitsgerät zugeordnet, dritte Lagermittel einem dritten Arbeitsgerät zugeordnet usw. Außerdem enthält das Anbaugestell Verstellmittel zur Verstellung der jeweiligen Schwenkposition einzelner Lagermittel. Dabei sind die Verstellmittel derart angeordnet und in ihrer Funktion wirksam, dass die Schwenkpositionen von Lagermitteln, welche unterschiedlichen Arbeitsgeräten (also z.B. erste Lagermittel einem ersten Arbeitsgerät, zweite Lagermittel einem zweiten Arbeitsgerät, dritte Lagermittel einem dritten Arbeitsgerät, usw.) zugeordnet sind, relativ zueinander verstellbar sind. Zusätzlich sind diese Lagermittel, welche unterschiedlichen Arbeitsgeräten zugeordnet sind, unabhängig voneinander bezüglich der gemeinsamen Gestellbasis verstellbar.

Auf diese Weise können mehrere am Anbaugestell gelagerte bzw. vom Anbaugestell aufgenommene Arbeitsgeräte vollkommen unabhängig voneinander hinsichtlich einer gewünschten Position verändert werden, ohne dass hierzu eine Positionsveränderung der Gestellbasis selbst für eine Positionsänderung einzelner Arbeitsgeräte benötigt wird. Vielmehr bieten die vorgenannten Lagermittel und Verstellmittel den Vorteil, dass die Gestellbasis am Nutzfahrzeug fest bzw. starr gekoppelt werden kann und somit fahrzeugseitig keine Bewegungsansteuerung für die Gestellbasis benötigt wird. Folglich kann das Anbaugestell baukastenartig auch an solche Nutzfahrzeuge gekoppelt werden, die standardmäßig über keine spezifischen Verstell- oder Bewegungsmechanismen (z.B. Hubwerk) für derartige Anbauten verfügen. Das vorgenannte Anbaugestell ist deshalb ohne aufwändige Zusatzmaßnahmen für eine Vielzahl unterschiedlicher Nutzfahrzeuge (z.B. Arbeitsfahrzeuge im Straßenbereich, landwirtschaftliche Fahrzeuge) modular einsetzbar.

Um die Kopplung des Anbaugestells an dem Nutzfahrzeug zu vereinfachen, ist die Gestellbasis mit einem geeigneten Anbauteil fest verbunden, welches für eine starre und wieder lösbare Kopplung an dem Nutzfahrzeug ausgebildet ist. Der Begriff "starre Kopplung" schließt auch Varianten ein, welche eine Formschlussverbindung zwischen dem Anbauteil und einem korrespondierenden Fahrzeugteil (z.B. standardmäßiger heck- oder frontseitiger Lagerbock) ermöglichen, wobei eine derartige Formschlussverbindung für eine einfache Kopplungsmontage im Rahmen herstellungsbedingter Abmessungstoleranzen eine geringe Beweglichkeit zwischen dem Anbauteil und korrespondierenden Fahrzeugteil zulässt.

Eine unbewegliche Kopplung der Gestellbasis an dem Nutzfahrzeug hat außerdem den Vorteil, dass das Gewicht des Anbaugestells im Wesentlichen vom Nutzfahrzeug selbst aufgefangen wird. Hierdurch liegen die Arbeitsgeräte beim Arbeitseinsatz lediglich mit ihrem Eigengewicht auf der zu bearbeitenden Bodenfläche auf. Eine zusätzliche Entlastung der Arbeitsgeräte ist deshalb nicht erforderlich. Gleichzeitig ist die Bodenanpassung der Arbeitsgeräte verbessert. Die Lagermittel, die Verstellmittel und gegebenenfalls ein Verstellantrieb (oder mehrere Verstellantriebe) zur Ansteuerung der Verstellmittel können sehr kraftsparend und entsprechend kostengünstig dimensioniert werden. Außerdem wird hierdurch vermieden, dass sich das Anbaugestell an den Arbeitsgeräten - insbesondere in deren Arbeitsposition - abstützt und hierdurch deren Arbeitsleistung beeinträchtigen oder deren Funktionsaufbau beschädigen könnte.

Im Falle einer Ausbildung der Arbeitsgeräte als Mähwerke bzw. Schneidwerke (z.B. Doppelmesserschneidwerke) bewirkt die nicht erforderliche zusätzliche Entlastung der Arbeitsgeräte, dass beim Mähen Verletzungen von Grasnarben oder ein Einstechen der Arbeitsgeräte in den Boden vermieden werden.

Grundsätzlich kann das Anbaugestell bei einer entsprechenden Dimensionierung sowie einer geeigneten Anzahl von Lagermitteln und Verstellmitteln eine beliebige Anzahl von Arbeitsgeräten aufnehmen. Vorzugsweise nimmt das Anbaugestell drei oder fünf Arbeitsgeräte auf.

Das vorbeschriebene Prinzip einer Positionsverstellung von Lagermitteln (und somit eines Arbeitsgerätes) relativ zu anderen Lagermitteln (und somit relativ zu anderen Arbeitsgeräten) und unabhängig voneinander auch relativ zu der Gestellbasis lässt sich bei dem Anbaugestell grundsätzlich mit einer beliebigen Anzahl von aufgenommenen Arbeitsgeräten realisieren.

Aufgrund der vollkommenen unabhängigen Verstellbarkeit der einzelnen Arbeitsgeräte ist das Anbaugestell auch dann einsetzbar, wenn nur ein einziges Arbeitsgerät zur Verfügung steht oder wenn einzelne am Anbaugestell gelagerte Arbeitsgeräte für den Arbeitseinsatz nicht benötigt werden oder aufgrund eines Defekts nicht aktiv sind.

Die Gestellbasis kann beispielsweise profilartige oder strebenartige Trägerelemente (z.B. rohrartig, Vierkantprofil, etc.) und/oder plattenartige Bestandteile enthalten. Die Gestellbasis kann einstückig oder aus mehreren Bauteilen zusammengebaut sein. Im Falle mehrerer Bauteile sind diese vorzugsweise miteinander fest (und gegebenenfalls wieder lösbar) miteinander verbunden. Alternativ können einzelne Bestandteile der Gestellbasis auch beweglich miteinander verbunden sein. Die Gestellbasis bildet insbesondere eine rahmenartige Konstruktion.

Die einzelnen Arbeitsgeräte sind an jeweils zugeordneten Lagermitteln gelagert, welche an der Gestellbasis schwenkbar angeordnet sind. Dabei kann der Begriff "die Lagermittel" je Arbeitsgerät abhängig von der Ausführungsform ein einziges Bauteil (z.B. Lenkerarm oder Traverse) oder mehrere Bauteile beinhalten.

Ebenso kann der Begriff "Verstellmittel" je Arbeitsgerät ein einziges Bauteil oder mehrere Bauteile beinhalten.

Das Anbaugestell kann an ein Nutzfahrzeug (z.B. Traktor, Schlepper, Straßenarbeitsfahrzeug) frontseitig, heckseitig oder lateral gekoppelt werden. Wie bereits erwähnt, sind die Arbeitsgeräte vorzugsweise als Schneidwerke ausgebildet. In diesem Fall ist das Anbaugestell insbesondere an einem landwirtschaftlichen Fahrzeug front- oder heckseitig gekoppelt. Dabei sind vorzugsweise ein mittleres Schneidwerk und - quer zur Fahrtrichtung - beiderseits des mittleren Schneidwerkes jeweils mindestens ein seitliches Schneidwerk an dem Anbaugestell gelagert.

Das Anbaugestell ist insbesondere für eine vollkommen unabhängige Höhenverstellung und Neigungsverstellung einzelner Arbeitsgeräte während oder außerhalb des Arbeitseinsatzes verwendbar. Dabei wird keine Höhenverstellung oder Neigungsverstellung der Gestellbasis und somit kein Hubwerk am Nutzfahrzeug benötigt. Im Falle von Schneidwerken ist deshalb die sogenannte Aushebung, d.h. die Höhenverstellung einzelner Schneidwerke, ohne besonderen technischen Aufwand unabhängig von einer aktuellen Position der weiteren vorhandenen Schneidwerke möglich.

Die Höhen- und/oder Neigungsverstellung eines Arbeitsgerätes wird über eine Verstellung der Schwenkposition der jeweiligen Lagermittel erzielt. Hierzu werden die betroffenen Lagermittel vorzugsweise entweder von Verstellmitteln angesteuert oder während des Arbeitseinsatzes entsprechend der Bodenbeschaffenheit automatisch geschwenkt derart, dass eine Schwenkbewegung bzw. Hubbewegung dieser Lagermittel entgegen ihrer Schwerkraft oder eine Schwenkbewegung bzw. Senkbewegung dieser Lagermittel in Richtung ihrer Schwerkraft erfolgt.

In einer bevorzugten Ausführungsform weisen die einem Arbeitsgerät zugeordneten Lagermittel mindestens einen Lagerarm auf, welcher mit einem Lagerabschnitt an der Gestellbasis schwenkbar gelagert ist. Ein von diesem Lagerabschnitt beabstandeter Tragabschnitt dient der Aufnahme und Fixierung des Arbeitsgerätes. Hierdurch wird auf technisch einfache Weise eine Schwenklagerung dieses Arbeitsgerätes relativ zum Anbaugestell erreicht.

Insbesondere wird das Arbeitsgerät am Tragabschnitt des Lagerarmes gelenkig aufgenommen. Hierzu weist der Tragabschnitt geeignete Gelenkmittel auf. Diese können z.B. ein Lagerauge und weitere Gelenkteile enthalten.

Vorzugsweise sind einzelne oder sämtliche Lagermittel an der Gestellbasis mittels eine Kugelgelenkes schwenkbar gelagert. Zusätzlich oder alternativ können auch an den Tragabschnitten einzelner oder sämtlicher Lagerarme Kugelgelenke vorgesehen sein. Derartige Kugelgelenke tragen dazu bei, dass ein Arbeitsgerät insbesondere während des Arbeitseinsatzes nicht nur entlang einer Haupt-Schwenkrichtung zur Höhen- und/oder Neigungsverstellung schwenkbar ist, sondern zusätzlich auch in einer Richtung quer zur Haupt-Schwenkrichtung beweglich ist. Hierdurch ist bei Arbeitsgeräten ein Querausgleich möglich, insbesondere wenn unterschiedliche Bodenneigungen einerseits im Bereich des Nutzfahrzeuges und andererseits im Bereich des betroffenen Arbeitsgerätes vorhanden sind.

Zur Unterstützung einer mechanisch stabilen Lagerung eines Arbeitsgerätes enthalten die ihm zugeordneten Lagermittel vorzugsweise mindestens einen unteren Lagerarm und mindestens einen oberen Lagerarm mit jeweils einem Lagerabschnitt und einem Tragabschnitt. Dabei sind der untere Lagerarm und der obere Lagerarm in einer Schwenkrichtung der Lagermittel voneinander beabstandet angeordnet. Hierdurch ist die Voraussetzung für eine parallelogrammartige Ausgestaltung der Lagermittel geschaffen, die insbesondere bei aufwändigeren Arbeitsgeräte-Konstruktionen deren stabile Lagerung am Anbaugestell unterstützen.

Zwischen Schwenkachsen der Lagerabschnitte des unteren und oberen Lagerarmes einerseits und zwischen Gelenkachsen der Tragabschnitte des unteren und oberen Lagerarmes andererseits kann jeweils ein lotrechter Abstand vorhanden sein. Die vorgenannte parallelogrammartige Lagerung ist dann vorzugsweise derart dimensioniert, dass die beiden lotrechten Abstände parallel zueinander ausgerichtet sind.

In einer weiteren bevorzugten Ausführung sind für die Lagerung eines Arbeitsgerätes zwei untere Lagerarme und ein oberer Lagerarm vorgesehen. Dabei sind die beiden unteren Lagerarme in einer quer zu ihrer Schwenkrichtung verlaufenden Richtung (z.B. Horizontalrichtung quer zur Fahrtrichtung des Nutzfahrzeuges) voneinander beabstandet, während der obere Lagerarm entlang dieser Richtung zwischen den beiden unteren Lagerarmen angeordnet ist. Diese Kombination von Lagerarmen ermöglicht eine stabile und kostengünstige Dreipunkt-Lagerung auch für aufwändigere Arbeitsgeräte.

Vorzugsweise ermöglicht das Anbaugestell eine schwenkbare Lagerung für mehrere Arbeitsgeräte, bei der die Schwenkachsen der unterschiedlichen Arbeitsgeräten (d.h. einem ersten Arbeitsgerät und einem weiteren Arbeitsgerät) zugeordneten Lagermittel quer zueinander angeordnet sind. Insbesondere sind diese Schwenkachsen rechtwinklig zueinander angeordnet. Bei gekoppeltem Anbaugestell ist dann eine Schwenkachse beispielsweise in horizontaler Querrichtung des Nutzfahrzeugs ausgerichtet, während die andere Schwenkachse in Fahrtrichtung ausgerichtet ist.

Vorzugsweise sind die bereitgestellten Verstellmittel zumindest teilweise - insbesondere sämtliche Verstellmittel - längenverstellbar, wodurch ein raumsparender Aufbau des Anbaugestells unterstützt wird. Insbesondere sind sämtliche Verstellmittel längenverstellbar ausgebildet.

Vorteilhaft sind die längenverstellbaren Verstellmittel als Zylinder-Kolben-Einheiten ausgebildet, wodurch die Verstellmittel als verhältnismäßig kostengünstige Standard-Bauteile zur Verfügung stehen.

In einer bevorzugten Ausführung sind die längenverstellbaren Verstellmittel zumindest teilweise mit einem Längsende bzw. Wirkende an der Gestellbasis angelenkt und mit einem anderen Längsende bzw. anderen Wirkende an einem Lagermittel angelenkt. Hierzu können beispielsweise die bei vielen Zylinder-Kolben-Einheiten üblichen Lageraugen oder ähnliche Lagerelemente verwendet werden, wodurch der Aufwand zur Montage der Verstellmittel an dem Anbaugestell gering bleibt.

Zur Ansteuerung bzw. zur Verstellung der Verstellmittel ist vorzugsweise mindestens ein Verstellantrieb vorgesehen. Insbesondere ist lediglich ein einziger Verstellantrieb zur Verstellung sämtlicher Verstellmittel ausreichend. Dieser Verstellantrieb kann entweder fahrzeugseitig oder am Anbaugestell bereitgestellt werden. Letztere Variante hat den Vorteil, dass sie den modularen Charakter des Anbaugestells mit Einsatzmöglichkeiten an unterschiedlichen Standard-Fahrzeugen unterstützt.

Vorzugsweise handelt es sich bei dem Verstellantrieb um ein elektrisches System, welches mit entsprechenden Bauteilen einzelne oder sämtliche Verstellmittel auf elektrische Weise antreibt. Beispielsweise sind einzelne oder sämtliche Verstellmittel als elektrischer Linearantrieb (z.B. als Hubspindel) ausgebildet. Dieses System ist besonders dann vorteilhaft, wenn an den einzelnen Arbeitsgeräten auch ein elektrisches Antriebssystem verwendet wird, z.B. ein elektrischer Bewegungsantrieb für den Antrieb von Schneidmessern einzelner Schneidwerke. Hierdurch können der Verstellantrieb und gegebenenfalls die elektrischen Antriebssysteme an den einzelnen Arbeitsgeräten im Vergleich zu anderen (z.B. hydraulischen) Antriebssystemen mit besonders geringem Gewicht am Anbaugestell zur Verfügung gestellt werden.

In einer bevorzugten Ausführungsform ist der Verstellantrieb hydraulisch ausgeführt und weist insbesondere eine kostengünstig erhältliche Fluidpumpe auf, welche mit Fluidzylindern als Verstellmittel zusammenwirkt. Die Fluidpumpe arbeitet insbesondere mit einer hydraulischen Flüssigkeit, wie z.B. Öl.

Die Gestellbasis ist vorzugsweise mindestens einen als Hohlprofil (z.B. rohrartig, Vierkantprofil, etc.) ausgebildeten Gestellträger auf, um die mechanische Stabilität des Anbaugestells bei gleichzeitig leichtem Eigengewicht zu unterstützen.

Der Hohlraum eines derartigen Gestellträgers wird in einer bevorzugten Ausführung zumindest teilweise als Tankraum für die Arbeitsflüssigkeit der vorgenannten Fluidpumpe genutzt. Hierdurch hat der Gestellträger eine Mehrfachfunktion und reduziert den Raum- und Bauteilebedarf für die Realisierung eines derartigen Verstellantriebes. Die Fluidpumpe ist mit dem Tankraum fluidisch verbunden. Besonders kurze Leitungswege zwischen der Fluidpumpe und dem Tankraum sind möglich, wenn die Fluidpumpe am Anbaugestell angeordnet ist. Alternativ ist die Fluidpumpe fahrzeugseitig angeordnet.

In einer bevorzugten Ausführungsform sind übliche Steuerventile vorgesehen, die jeweils mit einem als Fluidzylinder, insbesondere Zylinder-Kolben-Einheit, ausgebildeten Verstellmittel fluidisch verbunden sind. Abhängig von einer gewünschten Verstellung eines oder mehrerer Arbeitsgeräte werden die entsprechenden Steuerventile angesteuert. Hierzu ist eine geeignete Ansteuereinheit (z.B. Steuerelektronik) vorgesehen. Diese Ansteuereinheit wiederum steht vorzugsweise mit einer geeigneten Bedieneinheit in Verbindung, welche durch einen Benutzer (z.B. Fahrzeugführer) bedient werden kann. Hierdurch sind die Arbeitsgeräte mittels eines einfachen fluidischen Kreislaufs hinsichtlich ihrer Position verstellbar. Sämtliche Bauteile dieses Kreislaufes wie z.B. Steuerventile und gegebenenfalls weitere Ventile, Fluidpumpe(n), Tankraum für Fluid, Fluidleitungen sind in einer bevorzugten Ausführung im Bereich des Anbaugestells angeordnet, wodurch der modulare Charakter des Anbaugestells zusätzlich unterstützt wird. Auch die Ansteuereinheit zur Ansteuerung der Ventile ist vorzugsweise im Bereich des Anbaugestells angeordnet.

Der fluidische Kreislauf zur Positionsverstellung der einzelnen Arbeitsgeräte ist vorzugsweise derart aufgestaltet, das ein Arbeitsgerät während seines Arbeitseinsatzes (z.B. Schneidwerk während des Mähens) schwimmend gelagert ist, indem sich der zugeordnete Fluidzylinder in einem druckfreien Zustand befindet. Hierdurch können sich sämtliche Arbeitsgeräte während des Arbeitseinsatzes (z.B. Mähen einer Wiese) automatisch und individuell allen Bodenunebenheiten anpassen, ohne dass hierzu eine Ansteuerung seitens der Steuereinheit erforderlich ist. Soll hingegen ein Arbeitsgerät aufgrund einer Anforderung durch den Benutzer seine Schwenkposition anheben (z.B. Einnahme einer Transportposition, Überfahren eines Hindernisses), wird über die Steuereinheit das entsprechende Steuerventil derart angesteuert, dass Arbeitsfluid in den Fluidzylinder gepumpt wird. Mittels einer weiteren Steuerstellung des Steuerventils kann das in den Fluidzylinder eingepumpte Fluid eingeschlossen werden, wodurch eine angehobene Schwenkposition des betreffenden Arbeitsgerätes arretiert ist. Ein Absenken dieses angehobenen Arbeitsgerätes ist technisch einfach möglich, indem der entsprechende Fluidzylinder mittels des Steuerventils wieder in einen druckfreien Zustand überführt wird, so dass ein Absenken des Arbeitsgerätes allein aufgrund seines Eigengewichts erreicht wird. Mittels unterschiedlicher Steuerstellungen der Steuerventile können also die Funktionen "Absenken bzw. schwimmende Lagerung", "Anheben", und "angehobene Position arretiert" unabhängig voneinander für jedes Arbeitsgerät erzielt werden.

In einer weiteren bevorzugten Variante ist der oben geschilderte hydraulische Verstellantrieb durch eine pneumatische Ausführungsform mit erforderlichenfalls entsprechenden pneumatischen Komponenten ersetzt.

Die Erfindung wird anhand der in den Zeichnungen dargestellten Ausführungsbeispiele näher erläutert. Es zeigen:
- Fig. 1: eine schematische Draufsicht auf ein landwirtschaftliches Fahrzeug mit einem erfindungsgemäßen Anbaugestell,
- Fig. 2: eine perspektivische Teildarstellung des Anbaugestells gemäß Fig. 1,
- Fig. 3: eine Vorderansicht auf das Anbaugestell gemäß Fig. 1 in Fahrtrichtung,
- Fig. 4: eine geschnittene Seitenansicht des Anbaugestells entsprechend Schnittlinie IV-IV in Fig. 3, und
- Fig. 5: eine schematische Darstellung eines Fluidkreislaufes zur Positionsverstellung der am Anbaugestell gelagerten Arbeitsgeräte.

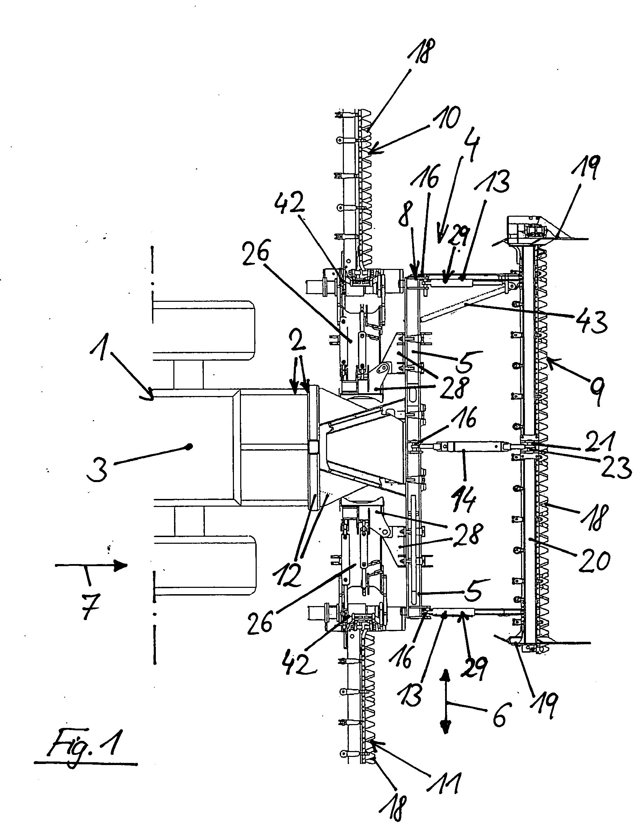

In Fig. 1 ist ein landwirtschaftliches Fahrzeug 1 in Form eines teilweise angedeuteten Traktors mit einem frontseitigen Lagerbock 2 dargestellt. Der Lagerbock 2 ist vorzugsweise starr mit einer Tragstruktur 3 (z.B. Chassis, Rahmen, Karosserie) des Fahrzeugs 1 verbunden. Das in Fig. 1 dargestellte Anbaugestell 4 weist einen rohr- oder rahmenartigen Gestellträger 5 auf, dessen Längserstreckung in einer horizontalen Querrichtung 6 quer zur Fahrtrichtung 7 des Fahrzeugs 1 verläuft.

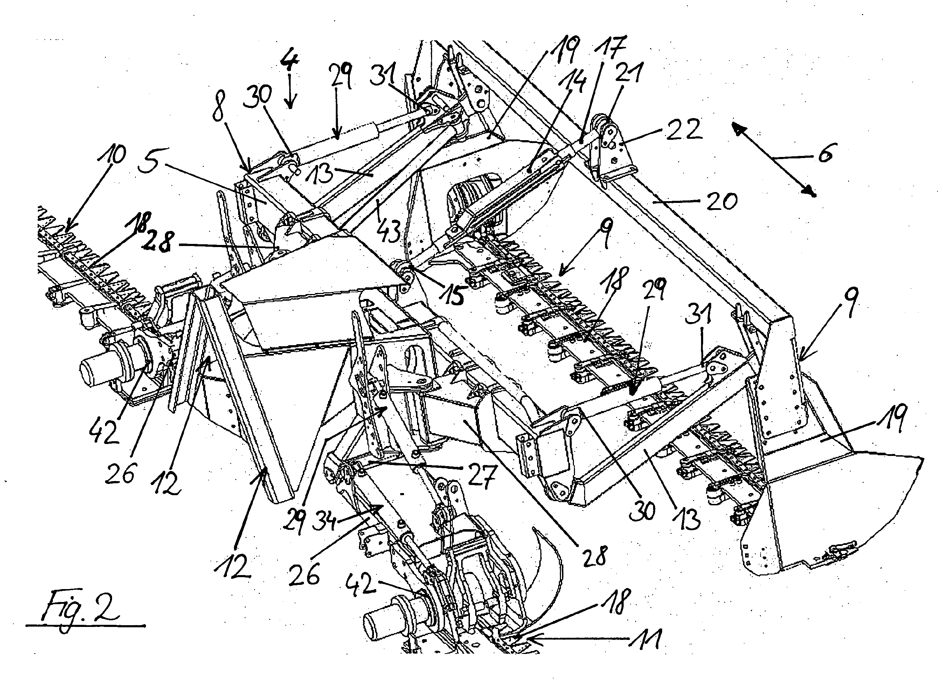

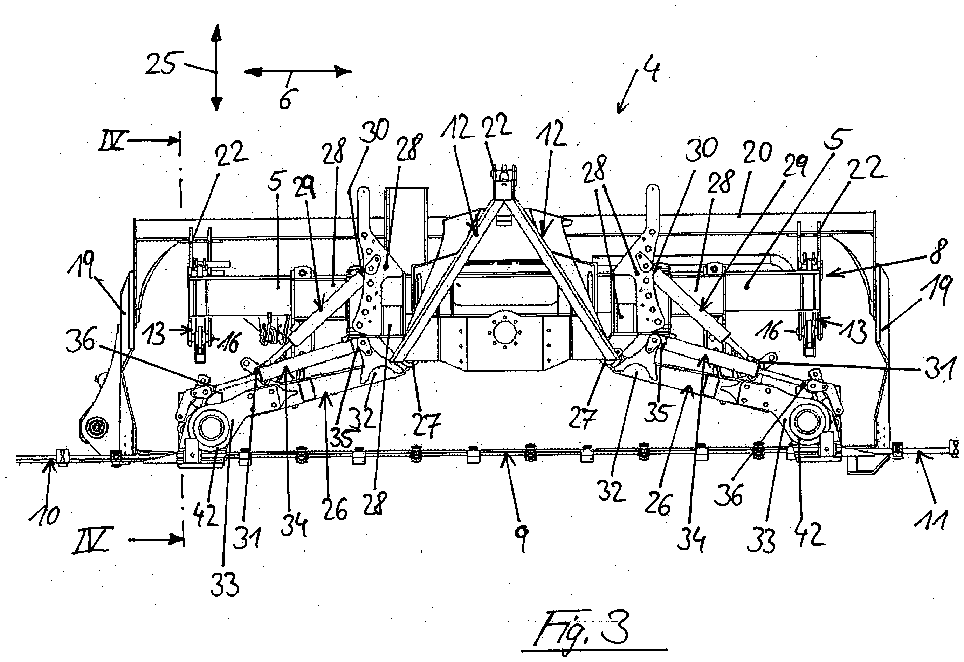

Der Gestellträger 5 ist Bestandteil einer Gestellbasis 8, an der noch zu beschreibende Lagermittel zur Lagerung dreier Arbeitsgeräte 9, 10, 11 schwenkbar angeordnet sind. Insbesondere bildet der Gestellträger 5 die Gestellbasis 8. Die Gestellbasis 8 ist mit einem Anbauteil 12 fest verbunden (z.B. verschraubt, verschweißt). Das Anbauteil 12 korrespondiert mit dem Lagerbock 2 und kann an diesen angekoppelt werden. Die Kopplung ist vorzugsweise starr oder im Wesentlichen unbeweglich (abgesehen von möglichen Fertigungstoleranzen in der Dimensionierung zueinander) und wieder lösbar. Hierzu kann zwischen dem Lagerbock 2 und dem Anbauteil 12 z.B. eine formschlüssige oder kraftschlüssige Verbindung vorgesehen sein. Im Ausführungsbeispiel weist das Anbauteil teilweise eine dreieckartige Querschnittsstruktur auf (Fig. 2, Fig. 3) und kann formschlüssig auf den Lagerbock 2 aufgesetzt werden.

Das Arbeitsgerät 9 ist vorzugsweise als ein standardmäßiges mittleres Schneidwerk mit einem Doppelmesser-Schneidwerk ausgebildet, während die beiden Arbeitsgeräte 10, 11 vorzugsweise als spiegelbildlich angeordnete, standardmäßige seitliche Schneidwerke mit jeweils einem Doppelmesser-Schneidwerk ausgebildet sind. Wie bereits erwähnt, sind den Arbeitsgeräten 9, 10, 11 verschiedene Lagermittel zugeordnet, um jedes einzelne Arbeitsgerät relativ zu den anderen Arbeitsgeräten und zusätzlich unabhängig von den anderen Arbeitsgeräten relativ zu der Gestellbasis 8 hinsichtlich ihrer Position zu verstellen.

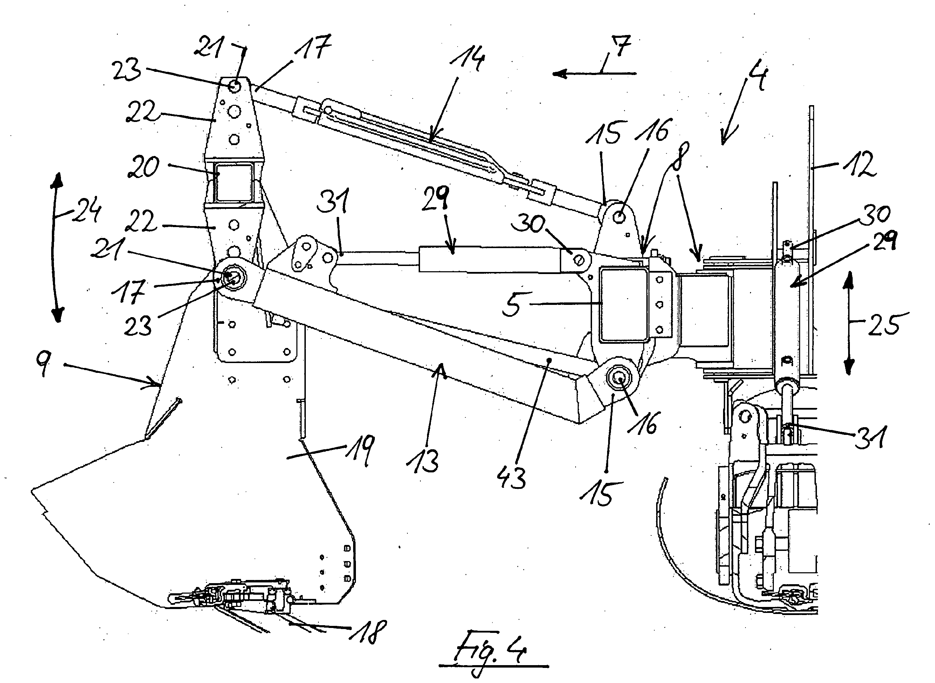

Dem ersten Arbeitsgerät 9 sind zwei untere Lagerarme 13 und ein oberer Lagerarm 14 als Lagermittel zugeordnet (Fig. 4). Dem Gestellträger 5 bzw. der Gestellbasis 8 zugewandt weisen die Lagerarme 13, 14 jeweils einen Lagerabschnitt 15 auf. Im Bereich dieser Lagerabschnitte 15 sind die Lagerarme 13, 14 jeweils an der Gestellbasis 8 schwenkbar gelagert. Die Lagerabschnitte 15 weisen jeweils eine Schwenkachse 16 auf. Diese Schwenkachsen 16 können Bestandteil eines Achsgelenkes oder eines Kugelgelenkes sein.

Den Lagerabschnitten 15 abgewandt weisen die Lagerarme 13, 14 jeweils einen Tragabschnitt 17 zur Aufnahme des Arbeitsgerätes 9 auf (Fig. 4). Das Arbeitsgerät 9 besteht im Wesentlichen aus einem Doppelmesser-Schneidwerk 18, zwei Außenschuhen 19 und einem rohrartigen Rahmen 20. Die Tragabschnitte 17 weisen jeweils Gelenkmittel 21 auf. Sie dienen der gelenkigen Aufnahme des Arbeitsgerätes 9 im Bereich des Rahmens 20. Hierzu ist an den Gelenkmitteln 21 jeweils ein Aufnahmeteil 22 angelenkt. Diese Aufnahmeteile sind entweder Bestandteil des Arbeitsgerätes 9 oder des Anbaugestells 4. Die Gelenkmittel 21 weisen jeweils eine etwa parallel zum Gestellträger 5 angeordnete Gelenkachse 23 auf. Diese Gelenkachsen 23 sind Bestandteil eines Kugelgelenkes.

Wie in Fig. 4 erkennbar ist, bildet die Lagerung für das Arbeitsgerät 9 an den Lagerarmen 13, 14 etwa eine stabile parallelogrammartige Lagerung. Für diese Lagerung sind zwei untere Lagerarme 13 und ein oberer Lagerarm 14 vorgesehen. Die beiden unteren Lagerarme 13 sind in Querrichtung 6, d.h. etwa quer zu einer Schwenkrichtung 24 des Arbeitsgerätes 9, voneinander beabstandet und hierbei mit ihren Lagerabschnitten 15 etwa an den Längsenden des Gestellträgers 5 angeordnet.

Die Verschwenkbarkeit des Arbeitsgerätes 9 entlang der Schwenkrichtung 24 ermöglicht eine Höhenverstellung des Arbeitsgerätes 9 entlang einer quer zur Fahrtrichtung 7 und quer zur Querrichtung 6 angeordneten Höhenrichtung 25.

Bei der in Fig. 4 dargestellten parallelogrammartigen Lagerung kann einerseits zwischen den Schwenkachsen 16 und andererseits zwischen den Gelenkachsen 23 jeweils ein lotrechter Abstand gebildet werden. Diese Abstände verlaufen etwa parallel zur Höhenrichtung 25 und somit auch etwa parallel zueinander.

Dem zweiten Arbeitsgerät 10 und dem dritten Arbeitsgerät 11 ist jeweils eine Traverse 26 als Lagermittel zugeordnet (Fig. 3). Die Traversen 26 sind jeweils mittels eines Drehlagers 27 im Bereich eines Traversen-Lagerabschnittes 32 an der Gestellbasis 8 gelagert. Hierzu sind die Drehlager 27 an Zwischenstücken 28 angeordnet, welche mit dem Gestellträger 5 fest verbunden, insbesondere fest verschraubt, sind. Die Schwenkachsen der Drehlager 27 sind parallel zur Fahrtrichtung 7 ausgerichtet und folglich etwa rechtwinklig zu den Schwenkachsen 16 angeordnet. An einem dem Traversen-Lagerabschnitt 32 abgewandten Traversen-Tragabschnitt 33 der Traversen 26 ist jeweils eine geeignete Gelenkaufnahme 42 zur gelenkigen bzw. drehbeweglichen Lagerung eines seitlichen Arbeitsgerätes 10 bzw. 11 vorgesehen. Die Gelenkachse bzw. Drehachse verläuft etwa parallel zum Drehlager 27.

Eine Schwenkposition der Lagerarme 13, 14 sowie unabhängig davon eine Schwenkposition einer oder beider Traversen 26 kann verstellt werden, indem diesen Lagermitteln entsprechende Verstellmittel zugeordnet sind. Bei den hier dargestellten Verstellmitteln handelt es sich um hydraulische Hubzylinder 29 bzw. um Zylinder-Kolben-Einheiten. Ein Hubzylinder 29 ist jeweils einem Lagerarm 13 und somit dem Arbeitsgerät 9 zugeordnet. Den beiden Traversen 26 und somit den beiden seitlichen Arbeitsgeräten 10, 11 ist ebenfalls jeweils ein Hubzylinder 29 zugeordnet.

Die Hubzylinder 29 bilden längenverstellbare Verstellmittel, welche mit einem ersten Längsende 30 an der Gestellbasis 8 und mit einem zweiten Längsende 31 an einem Lagerarm 13 bzw. an einer Traverse 26 angelenkt sind. Eine entsprechende Ansteuerung der Hubzylinder 29 bewirkt, dass jedes Arbeitsgerät relativ zu den anderen vorhandenen Arbeitsgeräten hinsichtlich seiner Position verstellt werden kann und zusätzlich unabhängig von den anderen Arbeitsgeräten relativ zur Gestellbasis 8 verstellbar ist. Beispielsweise kann das Arbeitsgerät 9 bei einer entsprechenden Schwenkbewegung der Lagerarme 13 relativ zu den beiden anderen Arbeitsgeräten 10, 11 höhenverstellt und/oder neigungsverstellt werden. Hierbei ist keine Bewegung der Gestellbasis 8 erforderlich, so dass die Positionsverstellung des Arbeitsgerätes 9 vollkommen unabhängig von den anderen an der Gestellbasis 8 gelagerten Arbeitsgeräten 10, 11 erfolgt. Entsprechend gilt dieses Prinzip einer Positionsverstellung auch für das Arbeitsgerät 10 und unabhängig davon für das Arbeitsgerät 11.

Die Hubzylinder 29 können - insbesondere hinsichtlich ihrer Längenverstellbarkeit - identisch oder unterschiedlich dimensioniert sein. Ein Hubzylinder 29 kann auch identisch oder unterschiedlich zu weiteren Hubzylindern 34 dimensioniert sein. Je ein weiterer Hubzylinder 34 ist einer Traverse 26 zugeordnet. Die Hubzylinder 34 sind jeweils mit einem ersten Längsende 35 im Bereich des Traversen-Lagerabschnittes 32 angelenkt und mit einem zweiten Längsende 36 an dem jeweiligen seitlichen Arbeitsgerät 10 bzw. 11 angelenkt. Somit kann ein seitliches Arbeitsgerät 10 oder 11 zusätzlich relativ zu der zugeordneten Traverse 26 hinsichtlich seiner Position verstellt werden.

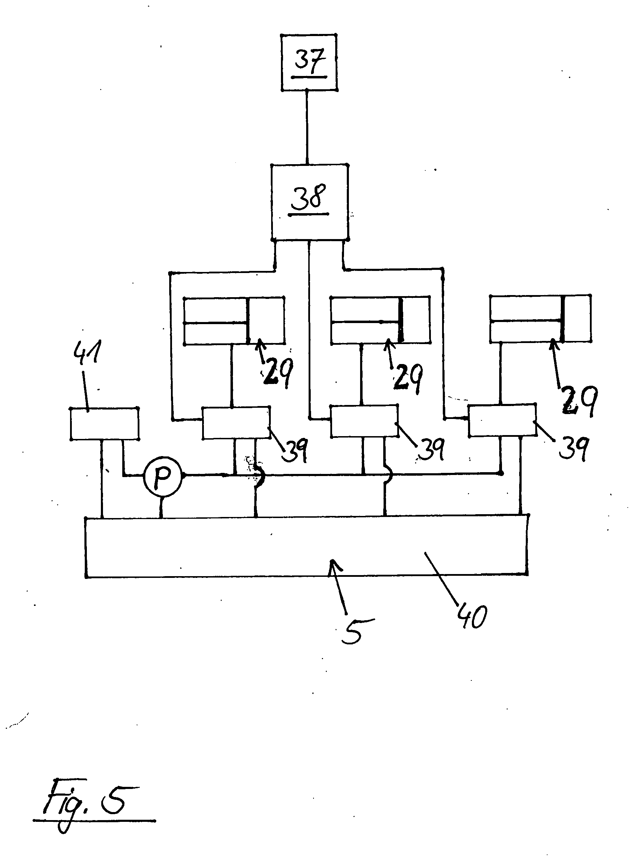

Gemäß Fig. 5 ist schematisch ein Fluidkreislauf mit einem Verstellantrieb zur Positionsverstellung der am Anbaugestell 4 gelagerten Arbeitsgeräte 9, 10, 11 dargestellt. Der Einfachheit halber ist in dieser Darstellung jedem Arbeitsgerät 9, 10, 11 ein einziger Hubzylinder 30 zugeordnet, auch wenn das Arbeitsgerät 9 in den weiteren Darstellungen von zwei Hubzylindern 30 verstellt wird. Mittels einer Bedieneinheit 37 kann ein Benutzer auswählen, welches Arbeitsgerät 9, 10, 11 er hinsichtlich der Position verstellen möchte und welche neue Position dieses ausgewählte Arbeitsgerät einnehmen soll. Diese Auswahl wird von einer vorzugsweise elektronischen Steuereinheit 38 empfangen, welche entsprechende Steuerventile 39 ansteuert. Für jeden Hubzylinder 29 ist ein Steuerventil 39 vorgesehen. Die Steuerventile 39 sind jeweils mit einer als Hydraulikpumpe P ausgebildeten Fluidpumpe und mit einem Hohlraum 40 innerhalb des Gestellträgers 5 als Tank für Hydraulikflüssigkeit fluidisch verbunden. Da die Hydraulikpumpe P permanent arbeitet, ist noch in üblicher Weise ein Pilotventil 41 vorgesehen, welches ebenfalls mit der Hydraulikpumpe P und mit dem Hohlraum 40 fluidisch verbunden ist. Die weiteren Hubzylinder 34 sind hier nicht dargestellt. Sie können jedoch in einer bevorzugten Ausführung ebenfalls innerhalb des dargestellten Fluidkreislaufes mittels geeigneter Ventile angesteuert werden.

Wie bereits geschildert, können mit diesem Fluidkreislauf die Funktionen "Absenken bzw. schwimmende Lagerung", "Anheben", und "angehobene Position arretiert" unabhängig voneinander für jedes Arbeitsgerät 9, 10, 11 erzielt werden, ohne dass hierbei eine Bewegung des Gestellträgers 5 relativ zum Fahrzeug 1 erforderlich ist. Bei einem druckfreien Zustand in den Hubzylindern 29 und den weiteren Hubzylindern 34, d.h. insbesondere während des Arbeitseinsatzes der Arbeitsgeräte 9, 10, 11 kann sich jedes Arbeitsgerät bezüglich Höhe und Neigung einer Bodenkontur unabhängig von der Lage des Anbaugestells 4 anpassen, so dass keine Positionsänderung des Anbaugestells 4 relativ zum Fahrzeug 1 erforderlich ist.

**Bezugszeichenliste**

| | | | |
|---|---|---|---|
| 1 | Fahrzeug | 25 | Höhenrichtung |
| 2 | Lagerbock | 26 | Traverse |
| 3 | Tragstruktur | 27 | Drehlager |
| 4 | Anbaugestell | 28 | Zwischenstück |
| 5 | Gestellträger | 29 | Hubzylinder |
| 6 | Querrichtung | 30 | Erstes Längsende |
| 7 | Fahrtrichtung | 31 | Zweites Längsende |
| 8 | Gestellbasis | 32 | Traversen-Lagerabschnitt |
| 9 | Arbeitsgerät | 33 | Traversen-Tragabschnitt |
| 10 | Arbeitsgerät | 34 | Hubzylinder |
| 11 | Arbeitsgerät | 35 | Erstes Längsende |
| 12 | Anbauteil | 36 | Zweites Längsende |
| 13 | Unterer Lagerarm | 37 | Bedieneinheit |
| 14 | Oberer Lagerarm | 38 | Steuereinheit |
| 15 | Lagerabschnitt | 39 | Steuerventil |
| 16 | Schwenkachse | 40 | Hohlraum |
| 17 | Tragabschnitt | 41 | Pilotventil |
| 18 | Doppelmesser-Schneidwerk | 42 | Gelenkaufnahme |
| 19 | Außenschuh | 43 | Führungsstrebe |
| 20 | Rahmen | | |
| 21 | Gelenkmittel | P | Hydraulikpumpe |
| 22 | Aufnahmeteil | | |
| 23 | Gelenkachse | | |
| 24 | Schwenkrichtung | | |

## Patentansprüche

1. Anbaugestell (4) zur Kopplung an ein Nutzfahrzeug (1),
- mit einer Gestellbasis (8),
- mit an der Gestellbasis (8) schwenkbar angeordneten Lagermitteln (13, 14, 26) zur Lagerung eines mittleren Arbeitsgeräts (9) und beiderseits des mittleren Arbeitsgeräts (9) jeweils mindestens eines seitlichen Arbeitsgeräts (10, 11) an der Gestellbasis (8), und
- mit Verstellmitteln (29) zur Verstellung einer Schwenkposition der Lagermittel (13, 14, 26) derart, dass die Schwenkpositionen der Lagermittel (13, 14, 26),
welche unterschiedlichen Arbeitsgeräten (9, 10, 11) zugeordnet sind, relativ zueinander verstellbar sind und unabhängig voneinander jeweils relativ zur Gestellbasis (8) verstellbar sind,
**dadurch gekennzeichnet, dass**
die Gestellbasis (8) mit einem Anbauteil (12) fest verbunden ist, welches für eine starre und lösbare Kopplung an ein Nutzfahrzeug (1) ausgebildet ist.

2. Anbaugestell nach Anspruch 1,
**dadurch gekennzeichnet, dass**
das Anbauteil (12) für eine Formschlussverbindung als starre und lösbare Kopplung ausgebildet ist.

3. Anbaugestell nach Anspruch 1 oder 2,
**dadurch gekennzeichnet, dass**
die Verstellung einer Schwenkposition von Lagermitteln (13, 14, 26) mittels einer Schwenkbewegung dieser Lagermittel (13, 14, 26) entgegen ihrer Schwerkraft oder in Richtung ihrer Schwerkraft erfolgt.

4. Anbaugestell nach einem der vorhergehenden Ansprüche,
**dadurch gekennzeichnet, dass**
die einem Arbeitsgerät (9, 10, 11) zugeordneten Lagermittel mindestens einen Lagerarm (13, 14, 26) aufweisen, welcher mit einem Lagerabschnitt (15, 32) an der Gestellbasis (8) schwenkbar gelagert ist und einen vom Lagerabschnitt (15, 32) beabstandeten Tragabschnitt (17, 33) zur Aufnahme dieses Arbeitsgerätes (9, 10, 11) aufweist.

5. Anbaugestell nach Anspruch 4,
**dadurch gekennzeichnet, dass**
der Tragabschnitt (17, 33) Gelenkmittel (21, 42) zur gelenkigen Aufnahme des Arbeitsgerätes (9, 10, 11) aufweist derart, dass das Arbeitsgerät (9, 10, 11) relativ zum Tragabschnitt (17, 33) schwenkgelagert ist.

6. Anbaugestell nach Anspruch 4 oder 5,
**dadurch gekennzeichnet, dass**
die dem Arbeitsgerät (9) zugeordneten Lagermittel mindestens einen unteren Lagerarm (13) und mindestens einen oberen Lagerarm (14) mit jeweils einem Lagerabschnitt (15) und einem Tragabschnitt (17) aufweisen, wobei der untere Lagerarm (13) und der obere Lagerarm (14) in einer Schwenkrichtung (24) der Lagermittel voneinander beabstandet sind.

7. Anbaugestell nach Anspruch 6,
**dadurch gekennzeichnet, dass**
- ein lotrechter Abstand zwischen Schwenkachsen (16) der Lagerabschnitte (15) des unteren und oberen Lagerarmes (13, 14), und
- ein lotrechter Abstand zwischen Gelenkachsen (23) der Tragabschnitte (17) des unteren und oberen Lagerarmes (13, 14)
parallel zueinander ausgerichtet sind.

8. Anbaugestell nach Anspruch 6 oder 7,
**dadurch gekennzeichnet, dass**
zwei untere Lagerarme (13) und ein oberer Lagerarm (14) vorgesehen sind,
wobei die beiden unteren Lagerarme (13) in einer quer zu ihrer Schwenkrichtung (24) verlaufenden Richtung (6) voneinander beabstandet sind und der obere Lagerarm (14) entlang dieser Richtung (6) zwischen den beiden unteren Lagerarmen (13) angeordnet ist.

9. Anbaugestell nach einem der vorhergehenden Ansprüche,
**dadurch gekennzeichnet, dass**
eine Schwenkachse (16) zwischen der Gestellbasis (8) und einem dem ersten Arbeitsgerät (9) zugeordneten Lagermittel (13, 14) sowie eine Schwenkachse (27) zwischen der Gestellbasis (8) und einem einem zweiten Arbeitsgerät (10, 11) zugeordneten Lagermittel (26) quer zueinander, insbesondere rechtwinklig zueinander, angeordnet sind.

10. Anbaugestell nach einem der vorhergehenden Ansprüche,
**dadurch gekennzeichnet, dass**
die Verstellmittel (29, 34) zumindest teilweise längenverstellbar sind.

11. Anbaugestell nach Anspruch 10,
**dadurch gekennzeichnet, dass**
längenverstellbare Verstellmittel mindestens eine Zylinder-Kolben-Einheit (29, 34) aufweisen.

12. Anbaugestell nach Anspruch 10 oder 11,
**dadurch gekennzeichnet, dass**
längenverstellbare Verstellmittel (29, 34) mit einem Längsende (30, 35) an der Gestellbasis (8) und mit einem anderen Längsende (31, 36) an einem Lagermittel (13 26) angelenkt sind.

13. Anbaugestell nach einem der vorhergehenden Ansprüche,
**dadurch gekennzeichnet, dass**
es einen Verstellantrieb (P) zur Verstellung von Verstellmitteln (29, 34) aufweist.

14. Anbaugestell nach Anspruch 13,
**gekennzeichnet durch** einen elektrischen Verstellantrieb.

15. Anbaugestell nach Anspruch 13,
**dadurch gekennzeichnet, dass**
der Verstellantrieb eine Fluidpumpe (P) aufweist und die Verstellmittel zumindest teilweise als Fluidzylinder (29, 34) ausgebildet sind.

16. Anbaugestell nach Anspruch 15,
**dadurch gekennzeichnet, dass**
die Gestellbasis (8) einen als Hohlprofil ausgebildeten Gestellträger (5) aufweist und die Fluidpumpe (P) mit dem Hohlraum (40) des Gestellträgers (5) fluidisch verbunden ist.

17. Anbaugestell nach einem der vorhergehenden Ansprüche,
**dadurch gekennzeichnet, dass**
das Arbeitsgerät (9, 10, 11) als Schneidwerk, insbesondere Doppelmesser-Schneidwerk (18), ausgebildet ist.

## Claims

1. Add-on frame (4) for coupling to a utility vehicle (1),
- having a frame base (8),
- having bearing means (13, 14, 26) which are arranged pivotably on the frame base (8) and which serve for mounting on the frame base (8) a central implement (9) and, on both sides of the central implement (9), in each case at least one lateral implement (10, 11), and
- having adjustment means (29) for adjusting a pivoting position of the bearing means (13, 14, 26) such that the pivoting positions of the bearing means (13, 14, 26), which are assigned to different implements (9, 10, 11), are able to be adjusted relative to one another and are each able to be adjusted relative to the frame base (8) independently of one another,
**characterized in that**
the frame base (8) is connected fixedly to an add-on part (12) which is designed for rigid and detachable coupling to a utility vehicle (1).

2. Add-on frame according to Claim 1,
**characterized in that**
the add-on part (12) is designed for a form-fitting connection as a rigid and detachable coupling.

3. Add-on frame according to Claim 1 or 2,
**characterized in that**
the adjustment of a pivoting position of bearing means (13, 14, 26) is realized by means of a pivoting movement of said bearing means (13, 14, 26) counter to the gravitational force thereof or in the direction of the gravitational force thereof.

4. Add-on frame according to one of the preceding claims,
**characterized in that**
the bearing means assigned to an implement (9, 10, 11) have at least one bearing arm (13, 14, 26), which is mounted pivotably on the frame base (8) by way of a bearing portion (15, 32) and has a support portion (17, 33) spaced apart from the bearing portion (15, 32) and serving for holding this implement (9, 10, 11).

5. Add-on frame according to Claim 4,
**characterized in that**
the support portion (17, 33) has articulation means (21, 42) for articulated holding of the implement (9, 10, 11) such that the implement (9, 10, 11) is mounted pivotably relative to the support portion (17, 33).

6. Add-on frame according to Claim 4 or 5,
**characterized in that**
the bearing means assigned to the implement (9) have at least one lower bearing arm (13) and at least one upper bearing arm (14), which each have a bearing portion (15) and a support portion (17), wherein the lower bearing arm (13) and the upper bearing arm (14) are spaced apart from one another in a pivoting direction (24) of the bearing means.

7. Add-on frame according to Claim 6,
**characterized in that**
- a perpendicular spacing between pivot axles (16) of the bearing portions (15) of the lower and upper bearing arms (13, 14) and
- a perpendicular spacing between articulation axles (23) of the support portions (17) of the lower and upper bearing arms (13, 14) are oriented parallel to one another.

8. Add-on frame according to Claim 6 or 7,
**characterized in that**
two lower bearing arms (13) and one upper bearing arm (14) are provided, wherein the two lower bearing arms (13) are spaced apart from one another in a direction (6) running transversely with respect to their pivoting direction (24) and the upper bearing arm (14) is arranged between the two lower bearing arms (13) along this direction (6) .

9. Add-on frame according to one of the preceding claims,
**characterized in that**
a pivot axle (16) between the frame base (8) and a bearing means (13, 14) assigned to the first implement (9) and a pivot axle (27) between the frame base (8) and a bearing means (26) assigned to a second implement (10, 11) are arranged transversely with respect to one another, in particular at right angles to one another.

10. Add-on frame according to one of the preceding claims,
**characterized in that**
the adjustment means (29, 34) are at least partially adjustable in length.

11. Add-on frame according to Claim 10,
**characterized in that**
length-adjustable adjustment means have at least one cylinder-piston unit (29, 34).

12. Add-on frame according to Claim 10 or 11,
**characterized in that**
length-adjustable adjustment means (29, 34) are articulated on the frame base (8) by way of a longitudinal end (30, 35) and are articulated on a bearing means (13, 26) by way of another longitudinal end (31, 36).

13. Add-on frame according to one of the preceding claims,
**characterized in that**
it has an adjustment drive (P) for adjusting adjustment means (29, 34).

14. Add-on frame according to Claim 13,
**characterized by** an electric adjustment drive.

15. Add-on frame according to Claim 13,
**characterized in that**
the adjustment drive has a fluid pump (P) and the adjustment means are designed at least in part as a fluid cylinder (29, 34).

16. Add-on frame according to Claim 15,
**characterized in that**
the frame base (8) has a frame carrier (5) which is designed as a hollow profile and the fluid pump (P) is fluidically connected to the cavity (40) of the frame carrier (5).

17. Add-on frame according to one of the preceding claims,
**characterized in that**
the implement (9, 10, 11) is designed as a cutting unit, in particular a dual-cutter cutting unit (18) .

## Revendications

1. Châssis porté (4) à coupler à un véhicule utilitaire (1),
- avec une base de châssis (8),
- avec des moyens de support (13, 14, 26) disposés de façon pivotante sur la base de châssis (8) pour le support d'un appareil de travail central (9) et chaque fois d'au moins un appareil de travail latéral (10, 11) de part et d'autre de l'appareil de travail central (9) sur la base de châssis (8), et
- avec des moyens de réglage (29) pour le réglage d'une position de pivotement des moyens de support (13, 14, 26), de telle manière que les positions de pivotement des moyens de support (13, 14, 26), qui sont attribués à différents appareils de travail (9, 10, 11), soient réglables l'une par rapport à l'autre et soient réglables indépendamment l'une de l'autre par rapport à la base de châssis (8),
**caractérisé en ce que** la base de châssis (8) est fermement assemblée à une partie portée (12), qui est configurée pour un couplage rigide et démontable à un véhicule utilitaire (1).

2. Châssis porté selon la revendication 1, **caractérisé en ce que** la partie portée (12) est configurée pour un assemblage par emboîtement en tant que couplage rigide et démontable.

3. Châssis porté selon une revendication 1 ou 2, **caractérisé en ce que** le réglage d'une position de pivotement de moyens de support (13, 14, 26) est effectué au moyen d'un mouvement de pivotement de ces moyens de support (13, 14, 26) contre leur gravité ou dans la direction de leur gravité.

4. Châssis porté selon l'une quelconque des revendications précédentes, **caractérisé en ce que** les moyens de support attribués à un appareil de travail (9, 10, 11) présentent au moins un bras de support (13, 14, 26), qui est monté de façon pivotante avec une partie de support (15, 32) sur la base de châssis (8) et présente une partie portante (17, 33) espacée de la partie de support (15, 32) pour recevoir cet appareil de travail (9, 10, 11).

5. Châssis porté selon la revendication 4, **caractérisé en ce que** la partie portante (17, 33) présente des moyens d'articulation (21, 42) pour la réception articulée de l'appareil de travail (9, 10, 11), de telle manière que l'appareil de travail (9, 10, 11) soit monté de façon pivotante par rapport à la partie portante (17, 33).

6. Châssis porté selon une revendication 4 ou 5, **caractérisé en ce que** les moyens de support attribués à l'appareil de travail (9) présentent au moins un bras de support inférieur (13) et un bras de support supérieur (14) avec chaque fois une partie de support (15) et une partie portante (17), dans lequel le bras de support inférieur (13) et le bras de support supérieur (14) sont espacés l'un de l'autre dans une direction de pivotement (24) des moyens de support.

7. Châssis porté selon la revendication 6, **caractérisé en ce que**
- une distance perpendiculaire entre des axes de pivotement (16) des parties de support (15) des bras de support inférieur et supérieur (13, 14) et
- une distance perpendiculaire entre des axes de pivotement (23) des parties portantes (17) des bras de support inférieur et supérieur (13, 14)
sont orientées parallèlement l'une à l'autre.

8. Châssis porté selon une revendication 6 ou 7, **caractérisé en ce qu'**il est prévu deux bras de support inférieurs (13) et un bras de support supérieur (14), dans lequel les deux bras de support inférieurs (13) sont espacés l'un de l'autre dans une direction (6) s'étendant transversalement à leur direction de pivotement (24) et le bras de support supérieur (14) est disposé le long de cette direction (6) entre les deux bras de support inférieurs (13).

9. Châssis porté selon l'une quelconque des revendications précédentes, **caractérisé en ce qu'**un axe de pivotement (16) entre la base de châssis (8) et un moyen de support (13, 14) attribué au premier appareil de travail (9) ainsi qu'un axe de pivotement (27) entre la base de châssis (8) et un moyen de support (26) attribué à un deuxième appareil de travail (10, 11) sont disposés transversalement l'un à l'autre, en particulier perpendiculairement l'un à l'autre.

10. Châssis porté selon l'une quelconque des revendications précédentes, **caractérisé en ce que** les moyens de réglage (29, 34) sont au moins partiellement réglables en longueur.

11. Châssis porté selon la revendication 10, **caractérisé en ce que** des moyens de réglage réglables en longueur présentent au moins une unité cylindre-piston (29, 34).

12. Châssis porté selon une revendication 10 ou 11, **caractérisé en ce que** des moyens de réglage réglables en longueur (29, 34) sont articulés avec une extrémité longitudinale (30, 35) à la base de châssis (8) et avec une autre extrémité longitudinale (31, 36) à un moyen de support (13, 26).

13. Châssis porté selon l'une quelconque des revendications précédentes, **caractérisé en ce qu'**il présente un entraînement de réglage (P) pour le réglage de moyens de réglage (29, 34).

14. Châssis porté selon la revendication 13, **caractérisé par** un entraînement de réglage électrique.

15. Châssis porté selon la revendication 13, **caractérisé en ce que** l'entraînement de réglage présente une pompe à fluide (P) et les moyens de réglage sont formés au moins partiellement par des cylindres à fluide (29, 34).

16. Châssis porté selon la revendication 15, **caractérisé en ce que** la base de châssis (8) présente un support de châssis (5) sous forme de profilé creux et la pompe à fluide (P) est fluidiquement raccordée à l'espace creux (40) du support de châssis (5).

17. Châssis porté selon l'une quelconque des revendications précédentes, **caractérisé en ce que** l'appareil de travail (9, 10, 11) est formé par un dispositif de coupe, en particulier un dispositif de coupe à double couteau (18).
